# EUROPÄISCHE PATENTSCHRIFT

(11) **EP 1 781 517 B1**
(45) Veröffentlichungstag und Bekanntmachung des Hinweises auf die Patenterteilung: **26.08.2009**
(21) Anmeldenummer: 05780469.2
(22) Anmeldetag: 30.06.2005
(51) Int. Cl.: B60T 8/00

(54) **BREMSANLAGE UND VERFAHREN ZUM ABBREMSEN FÜR EIN KRAFTFAHRZEUG**
BRAKING SYSTEM AND METHOD FOR BRAKING A MOTOR VEHICLE
SYSTEME DE FREINAGE ET PROCEDE DE FREINAGE POUR UN VEHICULE AUTOMOBILE

(30) Priorität: 15.07.2004 DE 102004034068
(43) Veröffentlichungstag der Anmeldung: 09.05.2007
(73) Patentinhaber: Bayerische Motoren Werke Aktiengesellschaft, 80809 München (DE)
(72) Erfinder: EICHNER, Georg, 85737 Ismaning (DE); LEITNER, Alexander, 80992 München (DE)
(86) Internationale Anmeldenummer: PCT/EP2005/007038
(87) Internationale Veröffentlichungsnummer: WO 2006/005446

(56) Entgegenhaltungen:
- DE-C1- 19 947 757
- US-A1- 2004 206 589

## Beschreibung

Die Erfindung betrifft eine Bremsanlage und ein Verfahren zum Abbremsen für ein Kraftfahrzeug nach den Oberbegriffen der Ansprüche 1 und 8.

Bei Kraftfahrzeugen, die am Berg losfahren oder zum Stillstand kommen, können beim Lösen bzw. Festbremsen der Betriebsbremse bei geringer Fahrgeschwindigkeit des Kraftfahrzeugs infolge der Hangabtriebskraft Knarzgeräusche auftreten, verursacht durch Schwingungen in Radbremse, Fahrwerk und Karosserie. Stick-Slip-Effekte bringen die Radbremse in eine Starrkörperschwingung, durch die das Federbein in der ersten Biegeordnung angeregt wird. Über das Fahrwerk kann sogar die Karosserie angeregt werden und eine so genannte Lautsprecherfunktion übernehmen. Die Fahrgeschwindigkeit bei der solche Knarzgeräusche auftreten, liegt im wesentlichen zwischen 0 und 10 km/h.

Bei Automatikfahrzeugen entstehen diese Knarzgeräusche zusätzlich, abhängig von der Höhe des Antriebsmomentes im Stillstand, z.B. an Verkehrsampeln, beim Lösen der Bremse, im Übergang Haften / Gleiten. Die Knarzgeräusche können auch vom Fahrer durch die Wahl des entsprechenden Bremslösedruckes absichtlich ausgelöst werden.

Bremsenknarzen tritt jeweils an der Vorderachse und Hinterachse auf, anteilig zur zu übertragenden Bremskraft. Störend kann die akustische Wahrnehmbarkeit im Fahrzeug empfunden werden.

Dass bei Bremsanlagen für Kraftfahrzeuge, insbesondere mit Scheibenbremsen und insbesondere beim Lösen der Bremsen bei anliegendem Antriebsmoment oder beim Abbremsen des Kraftfahrzeugs von höheren Geschwindigkeiten, unmittelbar vor dem Anhalten, ein so genanntes Bremsenknarzen auftreten kann, ist bereits bekannt. Dies ist auch in der WO 98/48193 beschrieben, wo auch eine Maßnahme zur Vermeidung von Bremsenknarzen aufgezeigt ist, nämlich die beiderseits der Bremsscheibe angeordneten Bremsbacken mit Bereichen verminderter Schichtstärke des Reibbelags so anzuordnen, dass diese Bereiche nicht spiegelsymmetrisch angeordnet sind.

Eine weitere Maßnahme des Vermeidens von Bremsenknarzen beschreibt die DE 199 47 757 C1. Dort werden verschiedene Bremskreise mit unterschiedlichen Bremsdrücken beaufschlagt, deren Addition die gewünschte resultierende Bremskraft ergibt. Die Bremskreise können daher auch mit gegenläufig alternierenden Bremsdrücken beaufschlagt werden. Beide Bremskreise werden allerdings immer zeitgleich mit dem Beginn der Bremsenbetätigung bedruckt. Hierdurch kann Bremsenquietschen in allen Geschwindigkeitsbereichen verhindert werden, da die resultierende Bremskraft immer der gewünschten Gesamtbremskraft entspricht. Das Steuergerät muss dazu aber auch immer über den gesamten Geschwindigkeitsbereich in Betrieb sein, nicht nur wenn sich das Fahrzeug im Bereich geringer Geschwindigkeiten bewegt, zum Beispiel nur bei einem gebremsten Übergang vom Fahren zum Stehen ab einer bestimmten geringen Fahrgeschwindigkeit.

Aufgabe der Erfindung ist es, für eine Bremsanlage eines Kraftfahrzeugs, mindestens mit einer Bremsenbetätigungseinrichtung für als Reibungsbremsen ausgebildete Radbremsen, weitere Maßnahmen zur Vermeidung von Bremsenknarzen aufzuzeigen.

Die Aufgabe wird erfindungsgemäß mit den Merkmalen beziehungsweise Verfahrensschritten der Ansprüche 1, 7 und 8 gelöst. Weitere Ausgestaltungen der Erfindung ergeben sich aus den abhängigen Ansprüchen.

Nach der Erfindung besitzt eine Bremsanlage für ein Kraftfahrzeug mindestens eine Bremsenbetätigungseinrichtung für als Reibungsbremsen ausgebildete Radbremsen. Die Bremsanlage ist dadurch gekennzeichnet, dass eine Steuereinrichtung vorgesehen ist, die bei einem gebremsten Übergang vom Fahren zum Stehen ab einer bestimmten geringen Fahrgeschwindigkeit beziehungsweise vom Stehen zum Fahren bis zu einer bestimmten geringen Fahrgeschwindigkeit die Radbremsen zeitversetzt zueinander betätigt oder zeitversetzt zueinander mit zunehmender Betätigungskraft beaufschlagt beziehungsweise zeitversetzt zueinander löst oder zeitversetzt zueinander mit abnehmender Betätigungskraft beaufschlagt.

Durch eine solche Steuereinrichtung kann vorteilhafterweise mit sehr geringem Aufwand und geringen Kosten eine Betriebsmöglichkeit der Bremsanlage hinzugefügt werden, die dem beschriebenen Bremsenknarzen entgegenwirkt.

Dabei sollte die bestimmte geringe Fahrgeschwindigkeit zwischen 0 und 10 km/h, insbesondere zwischen 0 und 6 km/h, liegen.

Nach dem erfindungsgemäßen Verfahren zum Abbremsen eines Kraftfahrzeugs werden bei einem gebremsten Übergang vom Fahren zum Stehen ab einer bestimmten geringen Fahrgeschwindigkeit beziehungsweise vom Stehen zum Fahren bis zu einer bestimmten geringen Fahrgeschwindigkeit die Radbremsen zeitversetzt zueinander betätigt oder zeitversetzt zueinander mit zunehmender Betätigungskraft beaufschlagt beziehungsweise zeitversetzt zueinander gelöst oder zeitversetzt zueinander mit abnehmender Betätigungskraft beaufschlagt.

Durch dieses Verfahren kann ebenfalls vorteilhafterweise mit sehr geringem Aufwand und geringen Kosten beim Abbremsen oder Losfahren dem beschriebenen Bremsenknarzen entgegengewirkt werden.

Dabei sollte die bestimmte geringe Fahrgeschwindigkeit ebenfalls zwischen 0 und 10 km/h, insbesondere zwischen 0 und 6 km/h, liegen.

Eine erfindungsgemäße Bremsanlage oder ein erfindungsgemäßes Verfahren kann in einer vorteilhaften Ausführungsform dadurch gekennzeichnet sein, dass die Radbremsen beim Fahren innerhalb des Bereichs geringer Fahrgeschwindigkeit und im Stand über die Bremsenbetätigungseinrichtung so angesteuert werden, dass bei deren Betätigung in Richtung Bremskrafterhöhung von jeder Radbremse eine im wesentlichen konstante Bremskraft erzeugt wird, die ein Festbremsen des Kraftfahrzeugs ermöglicht und dass bei der Betätigung in Richtung Bremskraftverminderung sich jede Radbremse vollständig löst und keine Bremskraft mehr erzeugt wird.

Ein Lösen der Radbremsen und Festbremsen zum Stand im relevanten Fahrgeschwindigkeitsbereich (0 bis 10 km/h) und Bremsdruckbereich (0 bis 20bar) nicht gesamthaft an allen vier Radbremsen zeitgleich, sondern zeitversetzt nacheinander nur abhängig vom Belagreibwert hat den Vorteil, dass der Fahrer im wesentlichen über die Bremsenbetätigungseinrichtung alternativ nur die beiden Zustände Stehen des Fahrzeuges bei geschlossenen Bremsen beziehungsweise Rollen des Fahrzeuges bei offenen Bremsen erreichen kann. Vorteilhafterweise ist es dadurch nicht mehr möglich, über einen längeren Zeitraum, im knarzrelvanten Bereich, d.h. genau beim Übergang von Haften zu Gleiten der Bremsbeläge an der Bremsscheibe, Fahrgeschwindigkeit und Bremsdruck so zu beeinflussen, dass Knarzgeräusche entstehen.

Dabei ist es nach der Erfindung und dem erfindungsgemäßen Verfahren alternativ möglich, dass die Radbremsen jeweils einzeln oder paarweise zeitversetzt zueinander betätigt oder zeitversetzt zueinander mit zunehmender Betätigungskraft beaufschlagt beziehungsweise zeitversetzt zueinander gelöst oder zeitversetzt zueinander mit abnehmender Betätigungskraft beaufschlagt werden.

Im besonderen kann die Bremsanlage für ein Kraftfahrzeug nach der Erfindung mindestens ein Antiblockierregelsystem besitzen, das die Steuereinrichtung für das zeitversetzte Aufbringen der Betätigungskraft bildet.

Außerdem kann die Betätigungskraft für die Radbremsen pneumatisch, hydraulisch oder durch elektromotorisch betriebene Aktuatoren aufgebracht werden.

Ein bevorzugtes Ausführungsbeispiel der Erfindung ist in der nachfolgenden Beschreibung und der zugehörigen Zeichnung näher dargestellt. Es zeigen:
- Figur 1:: ein Blockschaltbild eines Ausfüh-rungsbeispiels einer erfindungsgemäßen Bremsanlage und
- Figur 2:: ein Bremsdruck-Zeitdiagramm eines Bremslösevorgangs mit einer Bremsanlage gemäß der Erfindung.

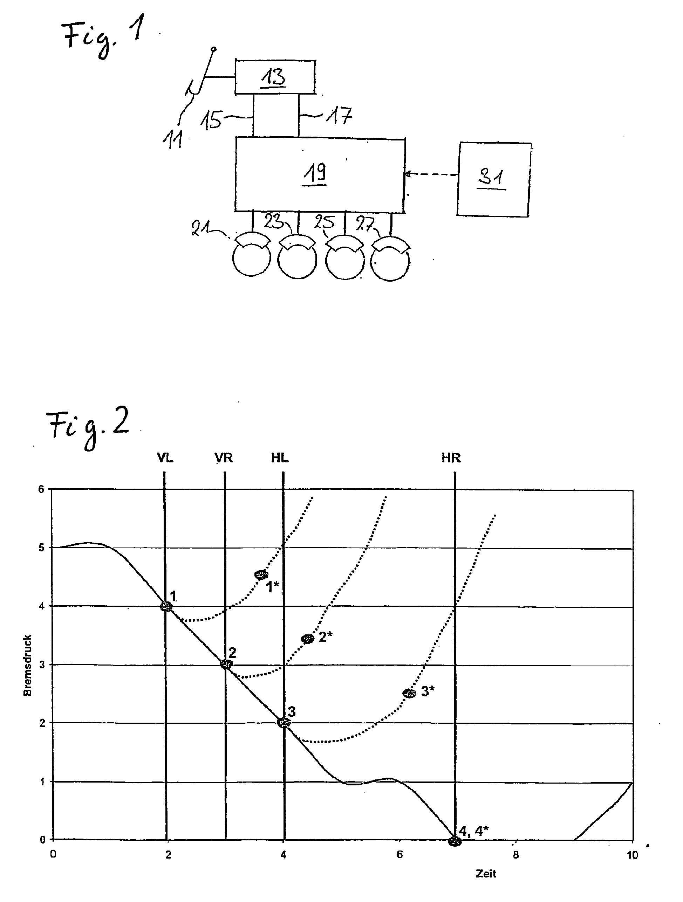

Figur 1 zeigt eine Bremsanlage für ein nicht näher dargestelltes Fahrzeug, mit Reibungsbremsen für jedes Rad. Die Bremsanlage ist in an sich bekannter Weise als hydraulische Reibungsbremsanlage oder elektrohydraulische Reibungsbremsanlage aufgebaut und verfügt über einen, durch eine als Bremspedal 11 ausgebildete Bremsenbetätigungseinrichtung, mechanisch betätigbaren Hauptbremszylinder 13, der über eine erste Ausgangsleitung 15 eines ersten Bremskreises und eine zweite Ausgangsleitung 17 eines zweiten Bremskreises mit einem Hydraulikaggregat 19 hydraulisch verbunden ist. An das Hydraulikaggregat 19 sind die vier Radbremseinrichtungen 21, 23, 25, 27 des Fahrzeugs angeschlossen, so dass der Bremsdruck in den Radbremseinrichtungen 21, 23, 25, 27 Rad individuell über das Hydraulikaggregat 19 eingestellt werden kann.

Der genaue Aufbau des Hydraulikaggregates 19 ist dem Fachmann aus in modernen Fahrzeugen üblichen hydraulischen oder elektrohydraulischen Bremsanlagen bekannt, die Fahrstabilitätsregelungen (z.B. ESP), Antiblockierregelungen (ABS) oder Antriebsschlupfregelungen (ASR) aufweisen. Daher wird der genaue Aufbau an dieser Stelle nicht weiter erläutert.

Eine Steuereinrichtung im Steuergerät 31 steuert die Radbremseinrichtungen 21, 23, 25, 27 so an, dass die Radbremsen, bei einem gebremsten Übergang vom Fahren zum Stehen ab einer bestimmten geringen Fahrgeschwindigkeit, beziehungsweise vom Stehen zum Fahren bis zu einer bestimmten geringen Fahrgeschwindigkeit, zeitversetzt zueinander betätigt werden oder zeitversetzt zueinander mit zunehmender Betätigungskraft beaufschlagt werden, beziehungsweise zeitversetzt zueinander gelöst werden oder zeitversetzt zueinander mit abnehmender Betätigungskraft beaufschlagt werden.

Figur 2 zeigt dazu als Beispiel ein Bremsdruck-Zeitdiagramm, ausgehend von einem an allen vier Rädern festgebremsten Fahrzeug, dessen Fahrer die Radbremsen über die Bremsenbetätigungseinrichtung langsam löst. Der Bremsdurck (bar) fällt damit über der Zeit (s) an allen Radbremsen, bis beim Erreichen des Punktes 1 das Steuergerät 31 an der Radbremse vorne links VL den Bremsdruck auf null absenkt, die Radbremse vorne links VL also nach 2 Sekunden völlig gelöst wird. Weiteres Verringern des Bremsdrucks über die Bremsenbetätigungseinrichtung verursacht nacheinander, am Punkt 2 das schlagartige Absenken des Bremsdrucks an der Radbremse vorne rechts VR nach 3 Sekunden und am Punkt 3 das schlagartige Absenken des Bremsdrucks an der Radbremse hinten links HL nach 4 Sekunden. Am Punkt 4 ist dann nach 7 Sekunden durch Absenken des Bremsdrucks an der Radbremse hinten rechts HR das Bremsdruckniveau null erreicht. Wäre dies, wie hier nicht zwangläufig durch Lösen der Bremsenbetätigungseinrichtung erfolgt, würde das Steuergerät 31 ebenfalls nach 7 Sekunden durch schlagartiges Absenken des Bremsdrucks an der Radbremse hinten rechts HR diese lösen.

Dabei können Zeit- und Druckschwellwerte für die Punkte 1 bis 4, ebenso wie die Radbremsenreihenfolge im Steuergerät 31 veränderbar, zum Beispiel über Parameter, eingestellt werden. Die Funktion ist so lange aktiv, bis entweder der Bremsdruck null ist oder die höchste einstellbare Druckschwelle überschritten wird, wenn durch nachfolgende Bremsdruckerhöhung über die Bremsenbetätigungseinrichtung der Vorgang wieder umgekehrt abläuft, wie durch den gestrichelt gezeichneten Bremsdruck-Zeitverlauf dargestellt. Die mit Stern indizierten Punkte 1*,2*,3*,4* kennzeichnen die Zeitpunkte, zu denen der Bremsdruck von null aus durch das Steuergerät 31 in den einzelnen Radbremsen wieder schlagartig eingestellt wird, wenn der Fahrer über die Bremsenbetätigungseinrichtung den Bremsdruck entsprechend des gestrichelt gezeichneten Bremsdruck-Zeitverlaufs wieder erhöht. So findet im Punkt 1* an der Radbremse vorne links VL ein Druckaufbau von null auf etwa 4,5 bar statt, im Punkt 2* an der Radbremse vorne rechts VR ein Druckaufbau von null auf etwa 3,4 bar und im Punkt 3* an der Radbremse hinten links HL ein Druckaufbau von null auf etwa 2,5 bar. Je nachdem zu welchem Zeitpunkt der Fahrer den Vorgang durch die Bremsenbetätigungseinrichtung umkehrt, werden die bereits drucklos geschalteten Radbremsen zeitversetzt in umgekehrter Reihenfolge wieder zugeschaltet

Es ist selbstverständlich, dass die einzelnen Druckverläufe und -werte, Zeitabschnitte und die Reihenfolge des Zu- bzw. Abschaltens der einzelnen Radbremsen variierbar sind und sich die Erfindung nicht auf bestimmte Werte, Verläufe oder Reihenfolgen beschränkt. Vielmehr soll die Erfindung alle Verfahrensweisen einschließen, die ein Variieren des Bremsdrucks bezüglich eines zeitlich versetzten Einsetzens bzw. Abschaltens der Bremskraft an den einzelnen Radbremsen umfassen. Mit einer solchen Verfahrensweise wird ein Bremsenknarzen im Bereich niederiger Geschwindigkeiten wirksam verhindert.

## Patentansprüche

1. Bremsanlage für ein Kraftfahrzeug, mindestens mit einer Bremsenbetätigungseinrichtung für als Reibungsbremsen ausgebildete Radbremsen (21, 23, 25, 27), **dadurch gekennzeichnet, dass** eine Steuereinrichtung (31) vorhanden ist, die bei einem gebremsten Übergang vom Fahren zum Stehen ab einer bestimmten geringen Fahrgeschwindigkeit beziehungsweise vom Stehen zum Fahren bis zu einer bestimmten geringen Fahrgeschwindigkeit die Radbremsen zeitversetzt zueinander betätigt oder zeitversetzt zueinander mit zunehmender Betätigungskraft beaufschlagt beziehungsweise zeitversetzt zueinander löst oder zeitversetzt zueinander mit abnehmender Betätigungskraft beaufschlagt.

2. Bremsanlage nach Anspruch 1, **dadurch gekennzeichnet, dass** die Radbremsen beim Fahren innerhalb des Bereichs geringer Fahrgeschwindigkeit und im Stand über die Bremsenbetätigungseinrichtung so angesteuert werden, dass bei deren Betätigung in Richtung Bremskrafterhöhung von jeder Radbremse eine im wesentlichen konstante Bremskraft erzeugt wird, die ein Festbremsen des Kraftfahrzeugs ermöglicht und dass bei der Betätigung in Richtung Bremskraftverminderung sich jede Radbremse vollständig löst und keine Bremskraft mehr erzeugt wird.

3. Bremsanlage nach Anspruch 1 oder 2, **dadurch gekennzeichnet, dass** die Radbremsen jeweils einzeln oder paarweise zeitversetzt zueinander betätigt oder zeitversetzt mit zunehmender Betätigungskraft beaufschlagt beziehungsweise zeitversetzt gelöst oder zeitversetzt mit abnehmender Betätigungskraft beaufschlagt werden.

4. Bremsanlage nach einem der Ansprüche 1 bis 3 mit einem Antiblockierregelsystem, **dadurch gekennzeichnet, dass** dieses die Steuereinrichtung für das zeitversetzte Aufbringen der Betätigungskraft bildet.

5. Bremsanlage nach einem der Ansprüche 1 bis 4, **dadurch gekennzeichnet, dass** die Betätigungskraft für die Radbremsen durch elektromotorisch betriebene Aktuatoren aufgebracht wird.

6. Bremsanlage nach einem der Ansprüche 1 bis 5, **dadurch gekennzeichnet, dass** die bestimmte geringe Fahrgeschwindigkeit zwischen 0 und 10 km/h, insbesondere zwischen 0 und 6 km/h, liegt.

7. Verfahren zum Abbremsen eines Kraftfahrzeugs mit einer Bremsanlage nach einem der Ansprüche 1 bis 6, **dadurch gekennzeichnet, dass** bei einem gebremsten Übergang vom Fahren zum Stehen ab einer bestimmten geringen Fahrgeschwindigkeit beziehungsweise vom Stehen zum Fahren bis zu einer bestimmten geringen Fahrgeschwindigkeit die Radbremsen zeitversetzt zueinander betätigt oder zeitversetzt zueinander mit zunehmender Betätigungskraft beaufschlagt beziehungsweise zeitversetzt zueinander gelöst oder zeitversetzt zueinander mit abnehmender Betätigungskraft beaufschlagt werden.

8. Verfahren zum Abbremsen eines Kraftfahrzeugs, **dadurch gekennzeichnet, dass** bei einem gebremsten Übergang vom Fahren zum Stehen ab einer bestimmten geringen Fahrgeschwindigkeit beziehungsweise vom Stehen zum Fahren bis zu einer bestimmten geringen Fahrgeschwindigkeit die Radbremsen zeitversetzt zueinander betätigt oder zeitversetzt zueinander mit zunehmender Betätigungskraft beaufschlagt beziehungsweise zeitversetzt zueinander gelöst oder zeitversetzt zueinander mit abnehmender Betätigungskraft beaufschlagt werden.

9. Verfahren nach Anspruch 8, **dadurch gekennzeichnet, dass** die Radbremsen beim Fahren innerhalb des Bereichs geringer Fahrgeschwindigkeit und im Stand über die Bremsenbetätigungseinrichtung so angesteuert werden dass bei deren Betätigung in Richtung Bremskrafterhöhung von jeder Radbremse eine im wesentlichen konstante Bremskraft erzeugt wird, die ein Festbremsen des Kraftfahrzeugs ermöglicht und dass bei der Betätigung in Richtung Bremskraftverminderung sich jede Radbremse vollständig löst und keine Bremskraft mehr erzeugt wird.

10. Verfahren nach einem der Ansprüche 8 oder 9, **dadurch gekennzeichnet, dass** die Radbremsen jeweils einzeln oder paarweise zeitversetzt zueinander betätigt oder zeitversetzt mit zunehmender Betätigungskraft beaufschlagt beziehungsweise zeitversetzt gelöst oder zeitversetzt mit abnehmender Betätigungskraft beaufschlagt werden.

11. Verfahren nach einem der Ansprüche 8 bis 10, **dadurch gekenntzeichnet, dass** die bestimmte geringe Fahrgeschwindigkeit zwischen 0 und 10 km/h, insbesondere zwischen 0 und 6 km/h liegt.

## Claims

1. A brake system for a motor vehicle, at least with a brake actuation device for wheel brakes (21, 23, 25, 27) configured as friction brakes, **characterised in that** a control device (31) is present, which, in the event of a braked transition from driving to standing, from a certain low driving speed or from standing to driving up to a certain low driving speed, actuates the wheel brakes at different times from one another or acts upon them at different times from one another with an increasing actuation force or releases them at different times from one another or acts upon them at different times from one another with a decreasing actuation force.

2. A brake system according to claim 1, **characterised in that** the wheel brakes, when driving within the range of a low driving speed and when standing, are activated by means of the brake actuation device in such a way that, when they are actuated to increase the braking force of each wheel brake, a substantially constant braking force is produced, which allows the motor vehicle to be braked to a stop, and **in that**, on actuation to decrease the braking force, each wheel brake is completely released and no further braking force is produced.

3. A brake system according to claim 1 or 2, **characterised in that** the wheel brakes are in each case actuated individually or in pairs at different times from one another or acted upon at different times with an increasing actuation force or released at different times or acted upon at different times with a decreasing actuation force

4. A brake system according to any one of claims 1 to 3 with an anti-locking control system, **characterised in that** this forms the control device for the application of the actuation force at different times.

5. A brake system according to any one of claims 1 to 4, **characterised in that** the actuation force for the wheel brakes is applied by electromotively operated actuators.

6. A brake system according to any one of claims 1 to 5, **characterised in that** the certain low driving speed is between 0 and 10 km/h, in particular between 0 and 6 km/h.

7. A method for braking a motor vehicle with a brake system according to any one of claims 1 to 6, **characterised in that** on a braked transition from driving to standing from a certain low driving speed or from standing to driving up to a certain low driving speed, the wheel brakes are actuated at different times from one another or are acted upon at different times from one another with an increasing actuation force, or released at different times from one another or acted upon with a decreasing actuation force at different times from one another.

8. A method for braking a motor vehicle, **characterised in that** on a braked transition from driving to standing from a certain low driving speed or from standing to driving up to a certain low driving speed, the wheel brakes are actuated at different times from one another or acted upon at different times from one another with an increasing actuation force or released at different times from one another or acted upon with a decreasing actuation force at different times from one another.

9. A method according to claim 8, **characterised in that** the wheel brakes when driving within the range of a low vehicle speed and when standing, are activated by means of the brake actuation device, in such a way that, on actuation thereof to increase the braking force of each wheel brake, a substantially constant braking force is produced, which allows the motor vehicle to be braked to a stop and **in that** on actuation to reduce the braking force, each wheel brake is completely released and no further braking force is produced.

10. A method according to either of claims 8 or 9, **characterised in that** the wheel brakes are in each case actuated individually or in pairs at different times from one another or acted upon with an increasing actuation force at different times or released at different times or acted upon with a decreasing actuation force at different times.

11. A method according to any one of claims 8 to 10, **characterised in that** the certain low driving speed is between 0 and 10 km/h, more especially between 0 and 6 km/h.

## Revendications

1. Installation de freins pour un véhicule automobile comportant au moins une installation d'actionnement de freins pour des freins de roues (21, 23, 25, 27) réalisés sous forme de freins à friction,
**caractérisée**
une installation de commande (31) dont, les freins de roues sont actionnés de manière décalée dans le temps les uns par rapport aux autres ou de façon décalée dans le temps à mesure que la force d'actionnement augmente ou sont décalés dans le temps les uns par rapport aux autres ou sont décalés dans le temps avec une force d'actionnement décroissante, lors du passage du mouvement freiné à l'immobilisation, à partir d'une certaine vitesse faible de roulage ou avant l'immobilisation jusqu'au roulage à une certaine vitesse faible de déplacement.

2. Installation de freins selon la revendication 1,
**caractérisée en ce que**
pendant le roulage dans la plage des faibles vitesses de roulage et à l'arrêt, les freins de roues sont commandés par l'installation d'actionnement de freins de façon que dans le sens de l'augmentation de la force de freinage de chaque frein de roue, leur actionnement génère une force de freinage essentiellement constante, permettant le freinage pour immobiliser le véhicule, et
pour l'actionnement dans le sens d'une réduction de la force de freinage, chaque frein de roue se libère complètement et ne génère plus de force de freinage.

3. Installation de freins selon l'une des revendications 1 ou 2,
**caractérisée en ce que**
les freins de roues sont actionnés respectivement de façon séparée ou décalée dans le temps, par paire ou décalée dans le temps en fonction de la force d'actionnement croissante ou décalée dans le temps de façon déclenchée ou décalée dans le temps en fonction de la force d'actionnement décroissante.

4. Installation de freins selon l'une des revendications 1 à 3, combinée à un système antiblocage,
**caractérisée en ce qu'**
elle est l'installation de commande pour appliquer la force d'actionnement de manière décalée dans le temps.

5. Installation de freins selon l'une des revendications 1 à 4,
**caractérisée en ce que**
la force d'actionnement des freins de roue est appliquée par des actionneurs à moteurs électriques.

6. Installation de freins selon l'une des revendications 1 à 5,
**caractérisée en ce que**
la vitesse de déplacement faible déterminée est comprise entre 0 et 10 km/h notamment entre 0 et 6 km/h.

7. Procédé de freinage d'un véhicule automobile avec une installation de freins selon l'une des revendications 1 à 6,
**caractérisé en ce que**
lors d'un passage entre le mouvement freiné et l'immobilisation, à partir d'une certaine vitesse faible de déplacement ou à partir de l'immobilisation vers le déplacement, jusqu'à une vitesse faible de déplacement, déterminée, les freins de roues sont actionnés de manière décalée dans le temps, les uns par rapport aux autres ou de manière décalée dans le temps les uns par rapport aux autres avec l'augmentation de la force d'actionnement ou sont libérés de façon décalée dans le temps ou sont sollicités de manière décalée dans le temps les uns par rapport aux autres à mesure que la force d'actionnement diminue.

8. Procédé de freinage d'un véhicule automobile,
**caractérisé en ce que**
lors d'un passage entre le mouvement freiné et l'immobilisation, à partir d'une certaine vitesse faible de déplacement ou à partir de l'immobilisation jusqu'au déplacement à une vitesse faible de déplacement, déterminée, les freins de roues sont actionnés de manière décalée dans le temps ou sont actionnés de façon décalée dans le temps les uns par rapport aux autres avec l'augmentation de la force d'actionnement ou sont libérés de façon décalée dans le temps ou sont sollicités de manière décalée dans le temps avec une force d'actionnement décroissante.

9. Procédé selon la revendication 8,
**caractérisé en ce qu'**
en cas de roulage dans la plage de vitesse faible de déplacement et à l'arrêt, les freins de roues sont commandés par l'intermédiaire de l'installation d'actionnement des freins de roues pour que leur actionnement dans la direction de l'augmentation de la force de freinage de chaque frein de roue, génère une force de freinage essentiellement constante, qui permet un freinage de blocage du véhicule automobile et, lors de l'actionnement dans le sens d'une réduction de la force de freinage, chaque frein de roue se libère complètement et plus aucune force de freinage n'est générée.

10. Procédé selon l'une des revendications 8 ou 9,
**caractérisé en ce que**
les freins de roues sont actionnés respectivement de façon séparée ou décalée par paire ou encore ils sont sollicités de manière décalée dans le temps avec une force d'actionnement croissante ou sont libérés de façon décalée dans le temps ou sont sollicités par une force d'actionnement décroissante de manière décalée dans le temps.

11. Procédé selon l'une des revendications 8 à 10,
**caractérisé en ce que**
la vitesse de déplacement faible, déterminée, est comprise entre 0 et 10 km/h notamment entre 0 et 6 km/h.
